# EUROPEAN PATENT APPLICATION

(11) **EP 4 703 655 A1**
(43) Date of publication of application: **04.03.2026**
(21) Application number: 23935162.0
(22) Date of filing: 25.12.2023
(51) Int. Cl.: F24F 11/89, F24F 11/88, F24F 11/65, F24F 11/64

(54) **AIR CONDITIONING SYSTEM CONTROL METHOD AND APPARATUS, AIR CONDITIONING SYSTEM, AND STORAGE MEDIUM**

(30) Priority: 23.04.2023 CN 202310443185
(71) Applicant: Gree Electric Appliances, Inc. of Zhuhai, Zhuhai, Guangdong 519031 (CN)
(72) Inventor: TENG, Tianfeng, Zhuhai, Guangdong 519031 (CN); JIAO, Huachao, Zhuhai, Guangdong 519031 (CN); JIN, Mengmeng, Zhuhai, Guangdong 519031 (CN); GAO, Han, Zhuhai, Guangdong 519031 (CN); SHEN, Chuantao, Zhuhai, Guangdong 519031 (CN)
(74) Representative: Lavoix
(86) International application number: PCT/CN2023/141408
(87) International publication number: WO 2024/221996

(57) **Abstract**

The present disclosure relates to an air conditioning system control method and apparatus, an air conditioning system, and a storage medium. The method comprises: when determining that a first outdoor unit in an operating state among a plurality of outdoor units fails, determining failure information corresponding to the first outdoor unit and type information corresponding to the first outdoor unit; according to the failure information and the type information, determining a control strategy corresponding to the first outdoor unit; and controlling the plurality of outdoor units according to the control strategy. Thus, according to the present disclosure, when it is determined that a failed first outdoor unit is present in the air conditioning system, instead of directly controlling the first outdoor unit to stop operating, different control strategies are implemented for a plurality of outdoor units according to failure information and type information of the first outdoor unit, thereby improving the user experience, and maximizing the benefits during the failure of the first outdoor unit.

## Description

### CROSS-REFERENCE TO RELATED APPLICATIONS

The present application is based on and claims the priority to the Chinese application No. 202310443185.2 filed on April 23, 2023, the disclosure of which is hereby incorporated by reference in its entirety into the present application.

### TECHNICAL FIELD

Embodiments of the present disclosure relates to the technical field of air conditioner, and in particular to a control method and apparatus for an air conditioning system, the air conditioning system, and a storage medium.

### BACKGROUND

An air conditioning system comprises a plurality of outdoor units, and when a certain outdoor unit in the plurality of outdoor units fails, the air conditioning system will stop operating, and relevant maintenance personnel are notified of live maintenance by a user to solve the failure of the outdoor unit. However, a certain period is required from the failure of the outdoor unit to the solution of the failure of the outdoor unit, which not only affects user experience, but also cannot maximize the benefits during the failure of the outdoor unit.

### SUMMARY

In a first aspect, an embodiment of the present disclosure provides a control method for an air conditioning system, where the air conditioning system comprises a plurality of outdoor units, the method comprising:
determining failure information and type information corresponding to a first outdoor unit when a failure of the first outdoor unit in an operating state in the plurality of outdoor units is determined;
determining a control strategy corresponding to the first outdoor unit according to the failure information and the type information; and
controlling the plurality of outdoor units according to the control strategy.

In some embodiments, the plurality of outdoor units are all photovoltaic outdoor units;
the determining a control strategy corresponding to the first outdoor unit according to the failure information and the type information, comprises:
determining a second outdoor unit in a shutdown state from the plurality of outdoor units when the failure information is that a non-power generation module in the first outdoor unit fails and the type information is a photovoltaic type;
acquiring first illumination information of an environment where the first outdoor unit is located; and
determining that the control strategy is a first control strategy when the first illumination information is presence of illumination; and
the controlling the plurality of outdoor units according to the control strategy, comprises:
   controlling the first outdoor unit to operate in a first mode, and controlling the second outdoor unit to be switched from the shutdown state to the operating state when the control strategy is the first control strategy.

In some embodiments, the controlling the first outdoor unit to operate in a first mode, comprises:
controlling an inversion module in the first outdoor unit to convert received light energy into electric energy; and
controlling the inversion module to transmit the converted electric energy to an energy storage module in the first outdoor unit, so that the energy storage module stores the received electric energy; or
controlling an inversion module in the first outdoor unit to convert received light energy into electric energy; and
controlling the inversion module to transmit the converted electric energy to a power grid to supply power to the power grid.

In some embodiments, the plurality of outdoor units comprises at least one photovoltaic outdoor unit and at least one non-photovoltaic outdoor unit;
the determining a control strategy corresponding to the first outdoor unit according to the failure information and the type information, comprises:
determining a third outdoor unit in a shutdown state from the at least one photovoltaic outdoor unit when the failure information is that any module in the first outdoor unit fails and the type information is a non-photovoltaic type;
acquiring second illumination information of an environment where the third outdoor unit is located; and
determining that the control strategy is a second control strategy when the second illumination information is presence of illumination; and
the controlling the plurality of outdoor units according to the control strategy, comprises:
   controlling the first outdoor unit to be switched from the operating state to a shutdown state, controlling the third outdoor unit to be switched from the shutdown state to an operating state, and controlling the third outdoor unit to operate in a second mode during the operating of the third outdoor unit when the control strategy is the second control strategy.

In some embodiments, the controlling the third outdoor unit to operate in a second mode, comprises:
controlling the third outdoor unit to operate with a target operating parameter,
the target operating parameter being determined by:
   determining an illumination grade corresponding to the illumination when the second illumination information is the presence of illumination;
   determining load information corresponding to the third outdoor unit according to the illumination grade; and
   determining the target operating parameter corresponding to the third outdoor unit according to the load information.

In some embodiments, the plurality of outdoor units comprises at least one photovoltaic outdoor unit and at least one non-photovoltaic outdoor unit;
the determining a control strategy corresponding to the first outdoor unit according to the failure information and the type information, comprises:
determining a fourth outdoor unit in a shutdown state from the at least one photovoltaic outdoor unit when the failure information is that a non-power generation module in the first outdoor unit fails and the type information is a photovoltaic type;
determining whether a fifth outdoor unit in an operating state is present in the at least one non-photovoltaic outdoor unit;and
determining that the control strategy is a third control strategy when determining that the fifth outdoor unit is present; and
the controlling the plurality of outdoor units according to the control strategy, comprises:
   controlling the first outdoor unit to operate in a third mode, and controlling the fourth outdoor unit to be switched from the shutdown state to an operating state when the control strategy is the third control strategy.

In some embodiments, the controlling the first outdoor unit to operate in a third mode, comprises:
controlling an energy storage module in the first outdoor unit to supply power to the fifth outdoor unit.

In a second aspect, an embodiment of the present disclosure provides a control apparatus for an air conditioning system, where the air conditioning system comprises a plurality of outdoor units, the apparatus comprising:
a determination module configured to determine failure information and type information corresponding to a first outdoor unit when a failure of the first outdoor unit in an operating state in the plurality of outdoor units is determined;
the determination module further configured to determine a control strategy corresponding to the first outdoor unit according to the failure information and the type information; and
a control module configured to control the plurality of outdoor units according to the control strategy.

In a third aspect, an embodiment of the present disclosure provides an air conditioning system, comprising: a controller, and a plurality of outdoor units and a memory connected with the controller, wherein the controller is configured to execute a control program for the air conditioning system stored in the memory to implement the control method for the air conditioning system as described above.

In a fourth aspect, an embodiment of the present disclosure provides a storage medium, having thereon stored one or more programs which are executable by one or more processors to implement the control method for the air conditioning system as described above.

According to the control method for an air conditioning system provided in the embodiments of the present disclosure, the air conditioning system comprises a plurality of outdoor units, and the method comprises: determining failure information and type information corresponding to a first outdoor unit when a failure of the first outdoor unit in an operating state in the plurality of outdoor units is determined; determining a control strategy corresponding to the first outdoor unit according to the failure information and the type information; and controlling the first outdoor unit according to the control strategy. In this way, according to the embodiments of the present disclosure, when it is determined that a failing first outdoor unit is present in an air conditioning system, instead of directly controlling the first outdoor unit to stop operating, different control strategies are carried out for a plurality of outdoor units according to failure information and type information of the first outdoor unit, improving the user experience, and maximizing the benefits during the failure of the first outdoor unit.

### BRIEF DESCRIPTION OF THE DRAWINGS

Fig. 1 is a schematic flow diagram of a control method for an air conditioning system according to an embodiment of the present disclosure;
Fig. 2 is a schematic flow diagram of another control method for an air conditioning system according to an embodiment of the present disclosure;
Fig. 3 is a schematic flow diagram of yet another control method for an air conditioning system according to an embodiment of the present disclosure;
Fig. 4 is a schematic flow diagram of yet another control method for an air conditioning system according to an embodiment of the present disclosure;
Fig. 5 is a schematic structural diagram of a control apparatus for an air conditioning system according to an embodiment of the present disclosure;
Fig. 6 is a schematic structural diagram of an air conditioning system according to an embodiment of the present disclosure.

In the above drawings:
10. determination module; 20. control module;
600. air conditioning system; 601. controller; 602. memory; 6021. operating system; 6022. application; 603. user interface; 604. network interface; 605. bus system; 606. outdoor unit.

### DETAILED DESCRIPTION

To make the objectives, technical solutions and advantages of the embodiments of the present disclosure more apparent, the technical solutions in the embodiments of the present disclosure will be described clearly and completely below in conjunction with the drawings in the embodiments of the present disclosure, and it is obvious that the described embodiments are some of the embodiments of the present disclosure, but not all of them. All other embodiments, which are obtained by one of ordinary skill in the art based on the embodiments in the present disclosure without making creative labor, shall fall within the scope of protection of the present disclosure.

To facilitate understanding of the embodiments of the present disclosure, further explanation will be made below with specific embodiments in conjunction with the accompanying drawings, and the embodiments are not intended to limit the embodiments of the present disclosure.

In order to solve the technical problems that the user experience is affected by a failure of an outdoor unit in an existing air conditioning system and the benefits during the failure of the outdoor unit cannot be maximized, the embodiments of the present disclosure provide a control method and apparatus for an air conditioning system, and the air conditioning system and an apparatus.

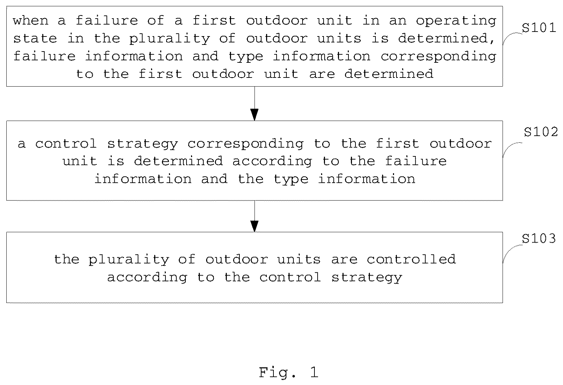

Referring to Fig. 1, Fig. 1 is a schematic flow diagram of a control method for an air conditioning system according to an embodiment of the present disclosure. The control method for an air conditioning system provided in the embodiment of the present disclosure is applied to the air conditioning system, which comprises a plurality of outdoor units and may be a photovoltaic air conditioning system, or a hybrid air conditioning system. The photovoltaic air conditioning system specifically refers to that, a plurality of outdoor units in the photovoltaic air conditioning system are all photovoltaic outdoor units; and the hybrid air conditioning system specifically refers to that, a plurality of outdoor units in the hybrid air conditioning system comprise both photovoltaic outdoor units and non-photovoltaic outdoor units.

The control method for an air conditioning system comprises the following steps.
S101: when a failure of a first outdoor unit in an operating state in the plurality of outdoor units is determined, failure information and type information corresponding to the first outdoor unit are determined.

In this embodiment, an execution subject is a controller in the air conditioning system. The failure information comprises a power generation module in the first outdoor unit failing, a non-power generation module in the first outdoor unit failing, and any module in the first outdoor unit failing. The type information comprises a photovoltaic type and a non-photovoltaic type.

S102: a control strategy corresponding to the first outdoor unit is determined according to the failure information and the type information.

In this embodiment, after the failure information and the type information are determined, the controller has therein prestored a control algorithm, and logical determination are made on the failure information and the type information by the control algorithm, to determine the control strategy corresponding to the first outdoor unit. When the air conditioning system is the photovoltaic air conditioning system and the type information is the photovoltaic type, different control strategies are determined according to the failure information that the power generation module in the first outdoor unit fails and the non-power generation module in the first outdoor unit fails. When the air conditioning system is the hybrid air conditioning system, when the type information is the photovoltaic type, different control strategies are determined according to the failure information that the power generation module in the first outdoor unit fails and the non-power generation module in the first outdoor unit fails, and when the type information is the non-photovoltaic type, a corresponding control strategy is determined according to the failure information that any module in the first outdoor unit fails. The specific determination as to the control strategy will be set forth below, and not detailed herein in this embodiment.

S103: the plurality of outdoor units are controlled according to the control strategy.

In this embodiment, the control strategy comprises an operating strategy and a switching strategy corresponding to the first outdoor unit, and the plurality of outdoor units are controlled according to the operating strategy and the switching strategy. The operating strategy specifically refers to an operating mode of the first outdoor unit; and the switching strategy specifically refers to a switching mode of the first outdoor unit.

According to the control method for an air conditioning system provided in this embodiment, when it is determined that a failing first outdoor unit is present in an air conditioning system, instead of directly controlling the first outdoor unit to stop operating, different control strategies are carried out for a plurality of outdoor units according to failure information and type information of the first outdoor unit, improving the user experience, and maximizing the benefits during the failure of the first outdoor unit.

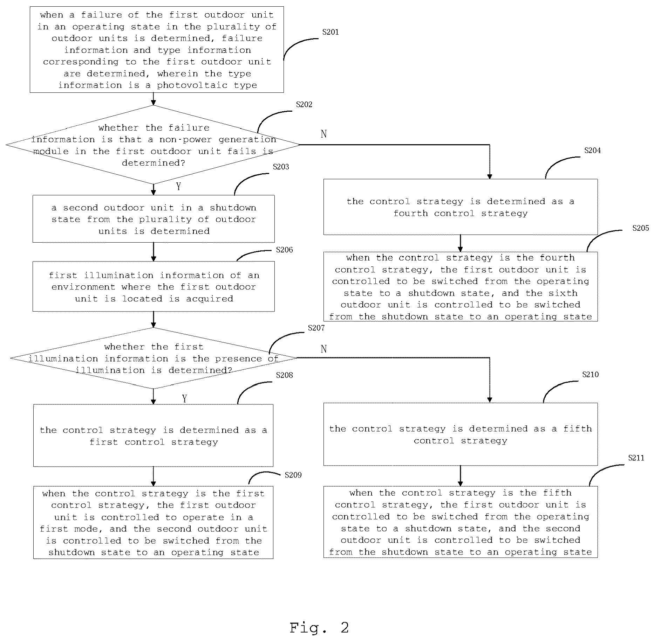

Referring to Fig. 2, Fig. 2 is a schematic flow diagram of another control method for an air conditioning system according to an embodiment of the present disclosure. The control method for an air conditioning system provided in the embodiment of the present disclosure is applied to a photovoltaic air conditioning system. The control method for an air conditioning system comprises the following steps.

S201: when a failure of the first outdoor unit in an operating state in the plurality of outdoor units is determined, failure information and type information corresponding to the first outdoor unit are determined, wherein the type information is a photovoltaic type.

In this embodiment, the step S201 is consistent with the above step S101 and is not detailed herein in this embodiment, and for details, reference can be made to the description of the above step S101.

S202: whether the failure information is that a non-power generation module in the first outdoor unit fails is determined.

In this embodiment, the first outdoor unit is a photovoltaic outdoor unit, in which a power generation module, an inversion module, and an energy storage module are provided. Failure determination made on the power generation module and non-power generation modules in the photovoltaic outdoor unit is to determine whether the photovoltaic air conditioner can receive light energy.

S203: when the failure information is that the non-power generation module in the first outdoor unit fails, a second outdoor unit in a shutdown state from the plurality of outdoor units is determined.

In this embodiment, when the non-power generation module in the first outdoor unit fails, it indicates that the power generation module in the photovoltaic outdoor unit can receive light energy, and at this time, the received light energy may be converted into electric energy by the inversion module for utilization, to maximize the benefits during the failure of the first outdoor unit. Moreover, it is determined whether a second outdoor unit in a shutdown state is present in the plurality of outdoor units to determine whether the first outdoor unit meets a switching condition; it is determined that the first outdoor unit meets the switching condition when the second outdoor unit in the shutdown state is present in the plurality of outdoor units, and after it is determined that the first outdoor unit meets the switching condition, step S206 hereinafter is executed; and when the second outdoor unit in the shutdown state is absent in the plurality of outdoor units, it indicates that there is no switchable second outdoor unit in the air conditioning system, and at this time, in order to ensure the reliability of the whole control system, the whole air conditioning system is controlled to stop operating.

S204: when the failure information is that the power generation module in the first outdoor unit fails, the control strategy is determined as a fourth control strategy.

In this embodiment, when the power generation module in the first outdoor unit fails, it indicates that the power generation module in the photovoltaic outdoor unit cannot receive light energy, and when the first outdoor unit fails, it cannot convert the received light energy into electric energy for utilization. In order to ensure normal operation of the whole air conditioning system and improve the user experience, when a sixth outdoor unit in a shutdown state is present in the plurality of outdoor units, the control strategy is determined as the fourth control strategy. When the sixth outdoor unit in the shutdown state is absent in the plurality of outdoor units, it indicates that there is no switchable sixth outdoor unit in the air conditioning system, and at this time, in order to ensure the reliability of the whole air conditioning system, the whole air conditioning system is controlled to stop operating.

S205: when the control strategy is the fourth control strategy, the first outdoor unit is controlled to be switched from the operating state to a shutdown state, and the sixth outdoor unit is controlled to be switched from the shutdown state to an operating state.

S206: after determining the second outdoor unit, first illumination information of an environment where the first outdoor unit is located is acquired.

In this embodiment, after the second outdoor unit is determined, illumination conditions of the environment where the first outdoor unit is located need to be acquired, to determine whether the first outdoor unit can receive the light energy. The first illumination information comprises presence of illumination and absence of illumination. When the first illumination information is the presence of illumination, it indicates that the first outdoor unit can receive the light energy, while when the first illumination information is the absence of illumination, it indicates that the first outdoor unit cannot receive the light energy.

S207: whether the first illumination information is the presence of illumination is determined.

S208: when the first illumination information is determined as the presence of illumination, the control strategy is determined as a first control strategy.

In this embodiment, after it is determined that the first illumination information is the presence of illumination, it indicates that the first outdoor unit meets the switching condition and the first outdoor unit can receive the light energy, and at this time, the control strategy is determined as the first control strategy.

S209: when the control strategy is the first control strategy, the first outdoor unit is controlled to operate in a first mode, and the second outdoor unit is controlled to be switched from the shutdown state to an operating state.

In one embodiment, the controlling the first outdoor unit to operate in a first mode, comprises:
controlling the inversion module in the first outdoor unit to convert the received light energy into electric energy; and
controlling the inversion module to transmit the converted electric energy to the energy storage module in the first outdoor unit, so that the energy storage module stores the received electric energy.

The power generation module acquires the light energy and transmits the light energy to the inversion module by which photoelectric conversion is performed, energy storage is performed using the energy storage module in the first outdoor unit, and when the first outdoor unit recovers to normal operation, it can operate using the electric energy stored in the energy storage module, to reduce consumption of electric energy of a power grid, maximizing the benefits during the failure of the first outdoor unit.

In another embodiment, the controlling the first outdoor unit to operate in a first mode, comprises:
controlling the inversion module in the first outdoor unit to convert the received light energy into electric energy; and
controlling the inversion module to transmit the converted electric energy to a power grid to supply power to the power grid.

After the inversion module in the first outdoor unit converts the light energy into the electric energy, it transmits the converted electric energy to the power grid, so that the power grid can supply power to other household appliances using the transmitted electric energy, to reduce consumption of electric energy of the power grid, maximizing the benefits during the failure of the first outdoor unit.

S210: when the first illumination information is determined as the absence of illumination, the control strategy is determined as a fifth control strategy.

S211: when the control strategy is the fifth control strategy, the first outdoor unit is controlled to be switched from the operating state to a shutdown state, and the second outdoor unit is controlled to be switched from the shutdown state to an operating state.

In this embodiment, for the steps S210 and S211, after the first illumination information is determined as the absence of illumination, it indicates that the first outdoor unit meets the switching condition but cannot receive light energy, and at this time, the control strategy is determined as the fifth control strategy. When the control strategy is the fifth control strategy, the switching of the first outdoor unit is directly performed. It should be noted that, if the shutdown of the photovoltaic outdoor unit is not caused by a failure of its own power generation module, when the photovoltaic outdoor unit is in the shutdown state, it only indicates that the photovoltaic outdoor unit no longer controls an indoor unit to operate, but the photovoltaic outdoor unit still operates in the first mode. The first mode is as described above and is not detailed herein in this embodiment.

According to the control method for air conditioning system provided in this embodiment, when it is determined that a failing first outdoor unit is present in the air conditioning system, instead of directly controlling the first outdoor unit to stop operating, different control strategies are carried out for a plurality of outdoor units according to failure information and type information of the first outdoor unit, improving the user experience, and maximizing the benefits during the failure of the first outdoor unit.

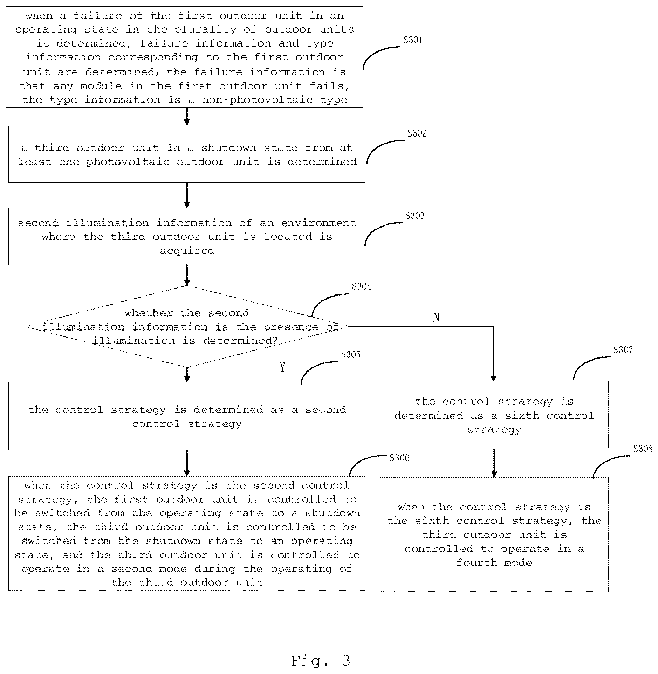

Referring to Fig. 3, Fig. 3 is a schematic flow diagram of yet another control method for an air conditioning system according to an embodiment of the present disclosure. The control method for an air conditioning system provided in the embodiment of the present disclosure is applied to a hybrid air conditioning system. The control method for an air conditioning system comprises the following steps.

S301: when a failure of the first outdoor unit in an operating state in the plurality of outdoor units is determined, failure information and type information corresponding to the first outdoor unit are determined.

In this embodiment, the failure information in the step S301 is that any module in the first outdoor unit fails, and the type information is a non-photovoltaic type.

S302: a third outdoor unit in a shutdown state from at least one photovoltaic outdoor unit is determined.

In this embodiment, when the non-photovoltaic first outdoor unit fails, in order to maximize the benefits during the failure of the first outdoor unit, it is determined whether a third outdoor unit in a shutdown state is present in the at least one photovoltaic outdoor unit, to determine whether the first outdoor unit meets a switching condition of switching from the non-photovoltaic outdoor unit to the photovoltaic outdoor unit. When the third outdoor unit in the shutdown state is present in the at least one photovoltaic outdoor unit, it is determined that the first outdoor unit meets the switching condition between different types of outdoor units, and step S303 hereinafter is performed. When the third outdoor unit in the shutdown state is absent in the at least one photovoltaic outdoor unit, it is determined whether a seventh outdoor unit in a shutdown state is present in at least one non-photovoltaic outdoor unit, to determine whether the first outdoor unit meets a switching condition of switching from the non-photovoltaic outdoor unit to the non-photovoltaic outdoor unit. When the seventh outdoor unit in the shutdown state is present in the at least one non-photovoltaic outdoor unit, it is determined that the first outdoor unit meets the switching condition between the same type of outdoor units, and at this time, the first outdoor unit can be controlled to be switched from the operating state to a shutdown state, and the seventh outdoor unit can be controlled to be switched from the shutdown state to an operating state. When the seventh outdoor unit in the shutdown state is absent in the at least one non-photovoltaic outdoor unit, in order to ensure the reliability of the whole air conditioning system, the whole air conditioning system can be controlled to stop operating.

S303: after determining the third outdoor unit, second illumination information of an environment where the third outdoor unit is located is acquired.

In this embodiment, after the third outdoor unit is determined, illumination conditions of the environment where the third outdoor unit is located need to be acquired, to determine whether the third outdoor unit can receive light energy. The second illumination information comprises presence of illumination and absence of illumination. When the second illumination information is the presence of illumination, it indicates that the third outdoor unit can receive the light energy, while when the second illumination information is the absence of illumination, it indicates that the third outdoor unit cannot receive the light energy.

S304: whether the second illumination information is the presence of illumination is determined.

S305: when the second illumination information is determined as the presence of illumination, the control strategy is determined as a second control strategy.

In this embodiment, after the second illumination information is determined as the presence of illumination, the third outdoor unit can supply power to itself in the presence of illumination, to reduce consumption of electric energy of a power grid, and therefore when the third outdoor unit operates, when the illumination is strong, the third outdoor unit can bear more loads, to reduce loads borne by a non-photovoltaic outdoor unit, and further reduce consumption of electric energy of the power grid, thereby maximizing the benefits during the failure of the first outdoor unit.

S306: when the control strategy is the second control strategy, the first outdoor unit is controlled to be switched from the operating state to a shutdown state, the third outdoor unit is controlled to be switched from the shutdown state to an operating state, and the third outdoor unit is controlled to operate in a second mode during the operating of the third outdoor unit.

In this embodiment, the controlling the third outdoor unit to operate in a second mode, comprises:
controlling the third outdoor unit to operate with a target operating parameter.

The target operating parameter may be determined by:
when the second illumination information is the presence of illumination, determining an illumination grade corresponding to the illumination;
determining load information corresponding to the third outdoor unit according to the illumination grade; and
determining the target operating parameter corresponding to the third outdoor unit according to the load information.

Specifically, the illumination grade may be a first illumination grade, and the illumination grade may also be a second illumination grade, the second illumination grade being higher than the first illumination grade. For different illumination grades, a correspondence between the illumination grade and the load information needing to be borne by the photovoltaic outdoor unit as well as the load information needing to be borne by the non-photovoltaic outdoor unit may be preset, and the above correspondence is stored in the controller. After the illumination grade corresponding to the illumination is determined, the load information corresponding to the third outdoor unit may be determined according to the correspondence. However, determining operating parameters corresponding to different types of outdoor units according to the load information may be performed according to the prior art, and the determination of the operating parameter is not detailed in this embodiment. When the illumination grade is the first illumination grade, the photovoltaic outdoor unit generates less electricity, it can be set that the photovoltaic outdoor unit bears less loads and the non-photovoltaic outdoor unit bears more loads. However, when the illumination grade is the second illumination grade, the photovoltaic outdoor unit generates more electricity, it can be set that the photovoltaic outdoor unit bears more loads and the non-photovoltaic outdoor unit bears less loads, and for details, reference can be made to Table 1. In this way, the consumption of the electric energy of the power grid can be minimized, maximizing the benefits during the failure of the first outdoor unit.

**Table 1 Loads borne by photovoltaic outdoor unit and non-photovoltaic outdoor unit**

| illumination grade | Loads borne by photovoltaic outdoor unit | borne by non-photovoltaic outdoor unit |
|---|---|---|
| First illumination grade | A% | C% (A<C) |
| Second illumination grade | B% | D% (B>D) |

S307: when the second illumination information is determined as the absence of illumination, the control strategy is determined as a sixth control strategy.

S308: when the control strategy is the sixth control strategy, the third outdoor unit is controlled to operate in a fourth mode.

In this embodiment, for the steps S307 and S308, the second illumination information is the absence of illumination, so that the third outdoor unit cannot implement conversion of electric energy, and at this time, the third outdoor unit can be controlled to operate in the fourth mode. The fourth mode can be understood as an operating mode consistent with the non-photovoltaic outdoor unit. It should be noted that, if the shutdown of the photovoltaic outdoor unit is not caused by a failure of its own power generation module, when the photovoltaic outdoor unit is in the shutdown state, it indicates that it no longer controls an indoor unit to operate, but the photovoltaic outdoor unit still operates in the first mode. The first mode is as described above and is not detailed herein in this embodiment.

According to the control method for an air conditioning system provided in this embodiment, when it is determined that a failing first outdoor unit is present in an air conditioning system, instead of directly controlling the first outdoor unit to stop operating, different control strategies are carried out for a plurality of outdoor units according to failure information and type information of the first outdoor unit, improving the user experience, and maximizing the benefits during the failure of the first outdoor unit.

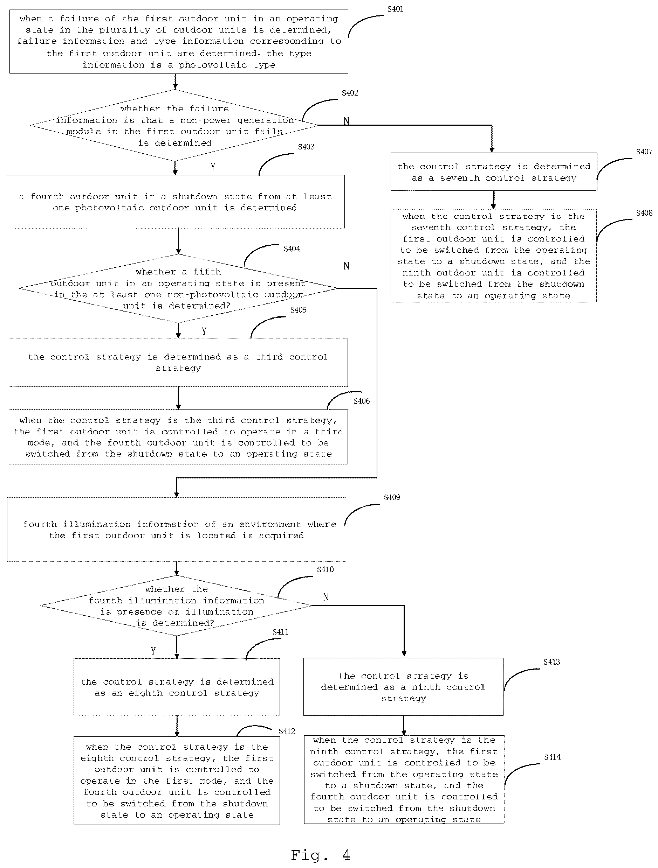

Referring to Fig. 4, Fig. 4 is a schematic flow diagram of yet another control method for an air conditioning system according to an embodiment of the present disclosure. The control method for an air conditioning system provided in the embodiment of the present disclosure is applied to a hybrid air conditioning system. The control method for an air conditioning system comprises the following steps.

S401: when a failure of the first outdoor unit in an operating state in the plurality of outdoor units is determined, failure information and type information corresponding to the first outdoor unit are determined.

In this embodiment, the type information in the step S401 is a photovoltaic type.

S402: whether the failure information is that a non-power generation module in the first outdoor unit fails is determined.

In this embodiment, the photovoltaic outdoor unit is therein provided with a power generation module, an inversion module, and an energy storage module. Failure determination on the power generation module and non-power generation modules in the photovoltaic outdoor unit is to determine whether the photovoltaic air conditioner can receive light energy.

S403: when the failure information is determined that the non-power generation module in the first outdoor unit fails, a fourth outdoor unit in a shutdown state from at least one photovoltaic outdoor unit is determined.

In this embodiment, when the non-power generation module in the photovoltaic first outdoor unit fails, it indicates that the first outdoor unit can receive light energy, and the received light energy can be converted into electric energy for utilization, to maximize the benefits during the failure of the first outdoor unit. Moreover, it is determined whether the fourth outdoor unit in the shutdown state is present in the at least one photovoltaic outdoor unit, to determine whether the first outdoor unit meets a switching condition, and when the fourth outdoor unit in the shutdown state is present in the at least one photovoltaic outdoor unit, it is determined that the first outdoor unit meets the switching condition, and step S404 hereinafter is executed; when the fourth outdoor unit in the shutdown state is absent in the at least one photovoltaic outdoor unit, it is determined whether an eighth outdoor unit in a shutdown state is present in at least one non-photovoltaic outdoor unit. When the eighth outdoor unit in the shutdown state is present in the at least one non-photovoltaic outdoor unit, third illumination information of an environment where the first outdoor unit is located is acquired, and when the third illumination information is presence of illumination, the first outdoor unit is controlled to operate in a first mode and the eighth outdoor unit is controlled to be switched from the shutdown state to an operating state (for the first mode, reference can be made to the above description, and it is not be detailed herein in this embodiment); when the third illumination information is absence of illumination, the first outdoor unit is controlled to be switched from the operating state to a shutdown state, and the eighth outdoor unit is controlled to be switched from the shutdown state to an operating state; and when the eighth outdoor unit in the shutdown state is absent in the at least one non-photovoltaic outdoor unit, in order to ensure the reliability of the whole air conditioning system, the whole air conditioning system can be controlled to stop operating.

S404: whether a fifth outdoor unit in an operating state is present in the at least one non-photovoltaic outdoor unit is determined.

In this embodiment, the fifth outdoor unit in the operating state is determined from the at least one non-photovoltaic outdoor unit, to supply power to the fifth outdoor unit by the energy storage module in the first outdoor unit, so as to reduce consumption of electric energy of a power grid, maximizing the benefits during the failure of the first outdoor unit.

S405: when the fifth outdoor unit in the operating state is present in the at least one non-photovoltaic outdoor unit, the control strategy is determined as a third control strategy.

S406: when the control strategy is the third control strategy, the first outdoor unit is controlled to operate in a third mode, and the fourth outdoor unit is controlled to be switched from the shutdown state to an operating state.

For the steps S405 and S406, the controlling the first outdoor unit to operate in a third mode, comprises: controlling the energy storage module in the first outdoor unit to supply power to the fifth outdoor unit.

S407: when the failure information is determined that the power generation module in the first outdoor unit fails, the control strategy is determined as a seventh control strategy.

In this embodiment, when the power generation module in the photovoltaic first outdoor unit fails, it indicates that the first outdoor unit cannot receive light energy and cannot convert the received light energy into electric energy for utilization. In order to ensure normal operation of the whole air conditioning system and improve the user experience, when a ninth outdoor unit in a shutdown state is present in the at least one photovoltaic outdoor unit or a ninth outdoor unit in a shutdown state is present in the at least one non-photovoltaic outdoor unit, the control strategy is determined as the seventh control strategy. When the ninth outdoor unit in the shutdown state is absent in the at least one photovoltaic outdoor unit and the ninth outdoor unit in the shutdown state is absent in the at least one non-photovoltaic outdoor unit, in order to ensure the reliability of the whole air conditioning system, the whole air conditioning system can be controlled to stop operating.

S408: when the control strategy is the seventh control strategy, the first outdoor unit is controlled to be switched from the operating state to a shutdown state, and the ninth outdoor unit is controlled to be switched from the shutdown state to an operating state.

In this embodiment, in order to ensure normal operation of the whole air conditioning system, after the ninth outdoor unit is determined, the first outdoor unit can be switched to the ninth outdoor unit for operation.

S409: when the fifth outdoor unit in the operating state is absent in the at least one non-photovoltaic outdoor unit, fourth illumination information of an environment where the first outdoor unit is located is acquired.

In this embodiment, when the fifth outdoor unit in the operating state is absent in the at least one non-photovoltaic outdoor unit, the energy storage module in the first outdoor unit cannot be controlled to supply power to the non-photovoltaic outdoor unit in the operating state. At this time, energy storage can be performed using the energy storage module in the first outdoor unit, and when the first outdoor unit recovers to normally operate, the first outdoor unit can operate by using the electric energy stored in the energy storage module, to reduce consumption of electric energy of a power grid, maximizing the benefits during the failure of the first outdoor unit. Or, after the inversion module in the first outdoor unit converts the light energy into electric energy, the converted electric energy is transmitted to a power grid, so that the power grid can supply power to other household appliances using the transmitted electric energy, to reduce consumption of electric energy of the power grid, maximizing the benefits during the failure of the first outdoor unit. However, the energy storage by the energy storage module and the power supply to the power grid are determined by the illumination information.

S410: whether the fourth illumination information is presence of illumination is determined.

S411: when the fourth illumination information is the presence of illumination, the control strategy is determined as an eighth control strategy.

S412: when the control strategy is the eighth control strategy, the first outdoor unit is controlled to operate in the first mode, and the fourth outdoor unit is controlled to be switched from the shutdown state to an operating state.

In this embodiment, for the steps S410 to S412, only when there is illumination, the first outdoor unit is controlled to operate in the first mode, and in order to ensure normal operation of the air conditioning system, the first outdoor unit is controlled to be switched to the fourth outdoor unit for operation. For the first mode reference can be made to the above description, and it is not detailed herein in this embodiment.

S413: when the third illumination information is absence of illumination, the control strategy is determined as a ninth control strategy.

S414: when the control strategy is the ninth control strategy, the first outdoor unit is controlled to be switched from the operating state to a shutdown state, and the fourth outdoor unit is controlled to be switched from the shutdown state to an operating state.

In this embodiment, for the steps S413 and S414, after the third illumination information is determined as absence of illumination, it indicates that the first outdoor unit meets the switching condition but cannot receive the light energy, and at this time, the first outdoor unit can be directly controlled for switching. It should be noted that, if the shutdown of the photovoltaic outdoor unit is not caused by a failure of its own power generation module, when the photovoltaic outdoor unit is in the shutdown state, it only indicates that it no longer controls an indoor unit to operate, but the photovoltaic outdoor unit still operates in the first mode. The first mode is as described above and is not be detailed herein in this embodiment.

According to the control method for an air conditioning system provided in this embodiment, when it is determined that a failing first outdoor unit is present in an air conditioning system, instead of directly controlling the first outdoor unit to stop operating, different control strategies are carried out for a plurality of outdoor units according to failure information and type information of the first outdoor unit, improving the user experience, and maximizing the benefits during the failure of the first outdoor unit.

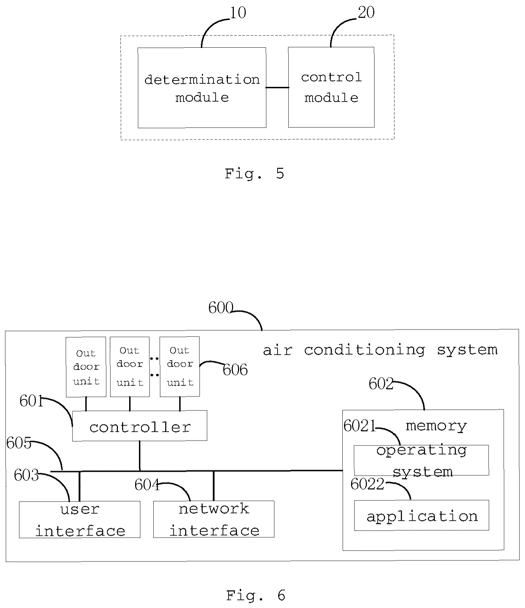

Referring to Fig. 5, Fig. 5 is a schematic structural diagram of a control apparatus for an air conditioning system according to an embodiment of the present disclosure. The control apparatus for an air conditioning system provided in the embodiment of the present disclosure comprises a determination module 10 and a control module 20. The determination module 10 is configured to, determine failure information and type information corresponding to a first outdoor unit when a failure of the first outdoor unit in an operating state in the plurality of outdoor units is determined; the determination module 10 is further configured to determine a control strategy corresponding to the first outdoor unit according to the failure information and the type information; and the control module 20 is configured to control the plurality of outdoor units according to the control strategy.

In this embodiment, when the plurality of outdoor units are all photovoltaic outdoor units, the determination module 10 is further configured to:
determine a second outdoor unit in a shutdown state from the plurality of outdoor units when the failure information is that a non-power generation module in the first outdoor unit fails and the type information is a photovoltaic type;
acquire first illumination information of an environment where the first outdoor unit is located; and
determine that the control strategy is a first control strategy when the first illumination information is presence of illumination.

In this embodiment, when the plurality of outdoor units are all photovoltaic outdoor units, the control module 20 is further configured to:
control the first outdoor unit to operate in a first mode, and control the second outdoor unit to be switched from the shutdown state to an operating state when the control strategy is the first control strategy.

In this embodiment, when the plurality of outdoor units are all photovoltaic outdoor units, the control module 20 is further configured to:
control an inversion module in the first outdoor unit to convert received light energy into electric energy; and
control the inversion module to transmit the converted electric energy to an energy storage module in the first outdoor unit, so that the energy storage module stores the received electric energy; or
control an inversion module in the first outdoor unit to convert received light energy into electric energy; and
control the inversion module to transmit the converted electric energy to a power grid to supply power to the power grid.

In this embodiment, when the plurality of outdoor units comprise at least one photovoltaic outdoor unit and at least one non-photovoltaic outdoor unit, the determination module 10 is further configured to:
determine a third outdoor unit in a shutdown state from the at least one photovoltaic type outdoor unit when the failure information is that any module in the first outdoor unit fails and the type information is a non-photovoltaic type;
acquire second illumination information of an environment where the third outdoor unit is located; and
determine that the control strategy is a second control strategy when the second illumination information is presence of illumination.

In this embodiment, when the plurality of outdoor units comprise at least one photovoltaic outdoor unit and at least one non-photovoltaic outdoor unit, the control module 20 is further configured to:
control the first outdoor unit to be switched from the operating state to a shutdown state, control the third outdoor unit to be switched from the shutdown state to an operating state, and control the third outdoor unit to operate in a second mode during the operating of the third outdoor unit when the control strategy is the second control strategy.

In this embodiment, when the plurality of outdoor units comprise at least one photovoltaic outdoor unit and at least one non-photovoltaic outdoor unit, the control module 20 is further configured to:
control the third outdoor unit to operate with a target operating parameter.

In this embodiment, when the plurality of outdoor units comprise at least one photovoltaic outdoor unit and at least one non-photovoltaic outdoor unit, the determination module 10 is further configured to:
determine an illumination grade corresponding to the illumination when the second illumination information is the presence of illumination;
determine load information corresponding to the third outdoor unit according to the illumination grade; and
determine the target operating parameter corresponding to the third outdoor unit according to the load information.

In this embodiment, when the plurality of outdoor units comprise at least one photovoltaic outdoor unit and at least one non-photovoltaic outdoor unit, the determination module 10 is further configured to:
determine a fourth outdoor unit in a shutdown state from the at least one photovoltaic type outdoor unit when the failure information is that a non-power generation module in the first outdoor unit fails and the type information is a photovoltaic type;
determine whether a fifth outdoor unit in an operating state is present in the at least one non-photovoltaic outdoor unit; and
determine that the control strategy is a third control strategy when determining that the fifth outdoor unit is present.

In this embodiment, when the plurality of outdoor units comprise at least one photovoltaic outdoor unit and at least one non-photovoltaic outdoor unit, the control module 20 is further configured to:
control the first outdoor unit to operate in a third mode, and control the fourth outdoor unit to be switched from the shutdown state to an operating state when the control strategy is the third control strategy.

In this embodiment, when the plurality of outdoor units comprise at least one photovoltaic outdoor unit and at least one non-photovoltaic outdoor unit, the control module 20 is further configured to:
control an energy storage module in the first outdoor unit to supply power to the fifth outdoor unit.

According to the control apparatus for an air conditioning system provided in this embodiment, when it is determined that a failing first outdoor unit is present in an air conditioning system, instead of directly controlling the first outdoor unit to stop operating, different control strategies are carried out for a plurality of outdoor units according to failure information and type information of the first outdoor unit, improving the user experience, and maximizing the benefits during the failure of the first outdoor unit.

Fig. 6 is a schematic structural diagram of an air conditioning system according to an embodiment of the present disclosure, where the air conditioning system 600 shown in Fig. 6 comprises: a plurality of outdoor units 606, at least one controller 601, a memory 602, at least one network interface 604, and another user interface 603. The various components in the air conditioning system 600 are coupled together by a bus system 605. It can be understood that the bus system 605 is used for connectively communication between these components. The bus system 605 comprises a power bus, a control bus, and a state signal bus in addition to a data bus. For clarity of illustration, however, the various buses are labeled as the bus system 605 in Fig. 6.

The user interface 603 may comprise a display, keyboard, or pointing device (e.g., a mouse, trackball, touch pad, or touch screen, etc.).

It can be appreciated that the memory 602 in the embodiment of the present disclosure may be a volatile memory or nonvolatile memory, or may comprise both volatile and nonvolatile memories. The non-volatile memory may be a read-only memory (ROM), programmable ROM (PROM), erasable PROM (EPROM), electrically EPROM (EEPROM), or flash Memory. The volatile memory may be a random access memory (RAM) which serves as an external cache. By exemplary but not limiting illustration, many forms of RAMs are usable, such as a static RAM (SRAM), dynamic RAM (DRAM), synchronous DRAM (SDRAM), double data rate SDRAM (DDRSDRAM), enhanced SDRAM (ESDRAM), synch link DRAM (SLDRAM), and direct rambus RAM (DRRAM). The memory 602 described herein is intended to comprise, but not limited to, these and any other suitable types of memories.

In some embodiments, the memory 602 stores the following elements: executable units or data structures, or a subset thereof, or an expanded set thereof: an operating system 6021 and an application 6022.

The operating system 6021 comprises various system programs, such as a framework layer, a core library layer, a drive layer, and the like, for implementing various basic services and processing hardware-based tasks. The application 6022 comprises various applications, such as a media player, browser, and the like, which are used for implementing various application services. The program for implementing the method of the embodiment of the present disclosure can be comprised in the application 6022.

In the embodiment of the present disclosure, by calling a program or instruction stored in the memory 602, which can be specifically a program or instruction stored in the application 6022, the controller 601 is configured to execute the method steps provided by the method embodiments, for example, comprising: determining failure information and type information corresponding to a first outdoor unit when a failure of the first outdoor unit in an operating state in the plurality of outdoor units is determined; determining a control strategy corresponding to the first outdoor unit according to the failure information and the type information; and controlling the plurality of outdoor units according to the control strategy.

The above method disclosed in the embodiment of the present disclosure may be applied to the controller 601, or implemented by the controller 601. The controller 601 may be an integrated circuit chip having signal processing capabilities. In implementation, the above steps of the method may be completed by hardware's integrated logic circuits or software forms of instructions in the controller 601. The above controller 601 may be a general-purpose controller, digital signal processor (DSP), application specific integrated circuit (ASIC), field programmable gate array (FPGA) or other programmable logic device, discrete gate or transistor logic device, or discrete hardware component. The various methods, steps, and logic blocks disclosed in the embodiments of the present disclosure may be implemented or performed. The general-purpose controller may be a microcontroller, or may be any conventional controller or the like. For the steps of the method disclosed in conjunction with the embodiments of the present disclosure, it may be directly embodied that they are executed by a hardware decoding controller or executed by a combination of hardware and software units in a decoding controller. The software unit may be located in a random access memory, flash memory, read-only memory, programmable read-only memory or electrically erasable programmable memory, register, and other developed memories in the art. The storage medium is located in the memory 602, and the controller 601 reads the information in the memory 602, and in combination with hardware thereof, completes the above steps of the method.

It can be understood that these embodiments described herein may be implemented in hardware, software, firmware, middleware, microcode, or a combination thereof. For the hardware implementation, the processing unit may be implemented in one or more application specific integrated circuits (ASICs), digital signal processing (DSP), DSP Devices (DSPDs), programmable logic devices (PLDs), field-programmable gate arrays (FPGAs), general-purpose controllers, controllers, micro-controllers, other electronic units for implementing the functions described in the present application or a combination thereof.

For the software implementation, the techniques described herein may be implemented by units for executing the functions described herein. The software code may be stored in the memory and executed by the controller. The memory may be implemented inside or outside the controller.

The air conditioning system provided in this embodiment may be the air conditioning system shown in Fig. 6, and may perform all the steps of the control method for an air conditioning system shown in Figs. 1 to 4, and then implement the technical effects of the control method for an air conditioning system shown in Figs. 1 to 4, and for details, please refer to the related description of Figs. 1 to 4, and they are not repeated herein for brevity.

An embodiment of the present disclosure also provides a storage medium (computer-readable storage medium). The storage medium herein stores one or more programs. The storage medium may comprise a volatile memory, such as random access memory; the memory may also comprise a non-volatile memory, such as read-only memory, flash memory, hard disk, or solid state disk; and the memory may also comprise a combination of the above kinds of memories.

The one or more programs in the storage medium are executable by the one or more processors to implement the above control method for an air conditioning system performed on the control apparatus side of the air conditioning system.

The processor is configured to execute a control program for an air conditioning system stored in the memory, to implement the following steps of the control method for an air conditioning system performed on the control apparatus side of the air conditioning system: determining failure information and type information corresponding to a first outdoor unit when a failure of the first outdoor unit in an operating state in the plurality of outdoor units is determined; determining a control strategy corresponding to the first outdoor unit according to the failure information and the type information; and controlling the plurality of outdoor units according to the control strategy.

Professionals should further appreciate that the units and algorithm steps of the examples described in conjunction with the embodiments disclosed herein may be implemented in electronic hardware, computer software, or a combination of the two, and in order to clearly illustrate the interchangeability between the hardware and the software, the components and steps of the examples have been generally described in the above illustration according to functions. Whether these functions are performed in hardware or software exactly depends upon specific applications and design constraints of the technical solutions. Professional technicians may implement the described functions using a different method for each specific application, but such implementations should not be considered as going beyond the scope of the present disclosure.

The steps of the method or algorithm described in conjunction with the embodiments disclosed herein may be implemented in hardware, a software module executed by a processor, or a combination of the two. The software module may be provided in a random access memory (RAM), memory, read-only memory (ROM), electrically programmable ROM, electrically erasable programmable ROM, register, hard disk, removable disk, CD-ROM, or any other form of storage media known in the art.

In the specific implementations described above, the objectives, technical solutions, and beneficial effects of the present disclosure have been further described in detail, it should be understood that the above contents are only the specific implementations of the present disclosure, and are not intended to limit the scope of protection of the present disclosure, and any modifications, equivalent substitutions, improvements and the like made within the spirit and principles of the present disclosure should be comprised in the scope of protection of the present disclosure.

## Claims

1. A control method for an air conditioning system, wherein the air conditioning system comprises a plurality of outdoor units, the method comprising:
determining failure information and type information corresponding to a first outdoor unit when a failure of the first outdoor unit in an operating state in the plurality of outdoor units is determined;
determining a control strategy corresponding to the first outdoor unit according to the failure information and the type information; and
controlling the plurality of outdoor units according to the control strategy.

2. The method according to claim 1, wherein the plurality of outdoor units are all photovoltaic outdoor units;
the determining a control strategy corresponding to the first outdoor unit according to the failure information and the type information, comprises:
determining a second outdoor unit in a shutdown state from the plurality of outdoor units when the failure information is that a non-power generation module in the first outdoor unit fails and the type information is a photovoltaic type;
acquiring first illumination information of an environment where the first outdoor unit is located; and
determining that the control strategy is a first control strategy when the first illumination information is presence of illumination; and
the controlling the plurality of outdoor units according to the control strategy, comprises:
controlling the first outdoor unit to operate in a first mode, and controlling the second outdoor unit to be switched from the shutdown state to the operating state when the control strategy is the first control strategy.

3. The method according to claim 2, wherein the controlling the first outdoor unit to operate in a first mode, comprises:
controlling an inversion module in the first outdoor unit to convert received light energy into electric energy; and
controlling the inversion module to transmit the converted electric energy to an energy storage module in the first outdoor unit, so that the energy storage module stores the received electric energy; or
controlling an inversion module in the first outdoor unit to convert received light energy into electric energy; and
controlling the inversion module to transmit the converted electric energy to a power grid to supply power to the power grid.

4. The method according to claim 1, wherein the plurality of outdoor units comprises at least one photovoltaic outdoor unit and at least one non-photovoltaic outdoor unit;
the determining a control strategy corresponding to the first outdoor unit according to the failure information and the type information, comprises:
determining a third outdoor unit in a shutdown state from the at least one photovoltaic outdoor unit when the failure information is that any module in the first outdoor unit fails and the type information is a non-photovoltaic type;
acquiring second illumination information of an environment where the third outdoor unit is located; and
determining that the control strategy is a second control strategy when the second illumination information is presence of illumination; and
the controlling the plurality of outdoor units according to the control strategy, comprises:
controlling the first outdoor unit to be switched from the operating state to a shutdown state, controlling the third outdoor unit to be switched from the shutdown state to an operating state, and controlling the third outdoor unit to operate in a second mode during the operating of the third outdoor unit when the control strategy is the second control strategy.

5. The method according to claim 4, wherein the controlling the third outdoor unit to operate in a second mode, comprises:
controlling the third outdoor unit to operate with a target operating parameter,
the target operating parameter being determined by:
determining an illumination grade corresponding to the illumination when the second illumination information is the presence of illumination;
determining load information corresponding to the third outdoor unit according to the illumination grade; and
determining the target operating parameter corresponding to the third outdoor unit according to the load information.

6. The method according to claim 1, wherein the plurality of outdoor units comprises at least one photovoltaic outdoor unit and at least one non-photovoltaic outdoor unit;
the determining a control strategy corresponding to the first outdoor unit according to the failure information and the type information, comprises:
determining a fourth outdoor unit in a shutdown state from the at least one photovoltaic outdoor unit when the failure information is that a non-power generation module in the first outdoor unit fails and the type information is a photovoltaic type;
determining whether a fifth outdoor unit in an operating state is present in the at least one non-photovoltaic outdoor unit;
determining that the control strategy is a third control strategy when determining that the fifth outdoor unit is present; and
the controlling the plurality of outdoor units according to the control strategy, comprises:
controlling the first outdoor unit to operate in a third mode, and controlling the fourth outdoor unit to be switched from the shutdown state to an operating state when the control strategy is the third control strategy.

7. The method according to claim 6, wherein the controlling the first outdoor unit to operate in a third mode, comprises:
controlling an energy storage module in the first outdoor unit to supply power to the fifth outdoor unit.

8. A control apparatus for an air conditioning system, wherein the air conditioning system comprises a plurality of outdoor units, the apparatus comprising:
a determination module configured to determine failure information and type information corresponding to a first outdoor unit when a failure of the first outdoor unit in an operating state in the plurality of outdoor units is determined;
the determination module further configured to determine a control strategy corresponding to the first outdoor unit according to the failure information and the type information; and
a control module configured to control the plurality of outdoor units according to the control strategy.

9. An air conditioning system, comprising: a controller, and a plurality of outdoor units and a memory connected with the controller, wherein the controller is configured to execute a control program for an air conditioning system stored in the memory, to implement the control method for an air conditioner system according to any of claims 1 to 7.

10. A storage medium, having thereon stored one or more programs which are executable by one or more processors, to implement the control method for an air conditioner system according to any of claims 1 to 7.

11. A control apparatus for an air conditioning system, wherein the air conditioning system comprises a plurality of outdoor units, the apparatus comprising:
a controller and a memory connected with the controller, wherein the controller is configured to execute a control program for an air conditioning system stored in the memory, to implement the control method for an air conditioner system according to any of claims 1 to 7.

12. A computer program, comprising:
instructions which, when executed by a controller, cause the controller to perform the control method for an air conditioner system according to any of claims 1 to 7.
